# EUROPÄISCHE PATENTSCHRIFT

(11) **EP 1 870 286 B1**
(45) Veröffentlichungstag und Bekanntmachung des Hinweises auf die Patenterteilung: **27.10.2010**
(21) Anmeldenummer: 07001716.5
(22) Anmeldetag: 26.01.2007
(51) Int. Cl.: B60R 5/04

(54) **Manuell absperrbare Modulbox**
Manually lockable module box
Boîte de module verrouillable manuellement

(30) Priorität: 23.06.2006 DE 102006029311
(43) Veröffentlichungstag der Anmeldung: 26.12.2007
(73) Patentinhaber: BOS GmbH & Co. KG, 73760 Ostfildern (DE)
(72) Erfinder: Sitzler, Wolfgang, 42111 Wuppertal (DE); Bohlke, Hartmut, 42369 Wuppertal (DE)
(74) Vertreter: Rüger, Barthelt & Abel Patentanwälte

(56) Entgegenhaltungen:
- EP-A- 1 184 224
- EP-A- 1 642 777
- US-A- 5 628 543
- US-A- 5 816 640

## Beschreibung

Fahrzeuge werden heute als Sonderausrüstung mit so genannter Durchladeeinrichtung angeboten. Zu der Durchladeeinrichtung gehört eine Öffnung, die in der Trennwand zwischen der Fahrgastzelle und dem Koffer- oder Laderaum enthalten ist. In dieser Öffnung sitzt eine Fassungsanordnung zur Aufnahme eines Behälters. Der Behälter ist dazu eingerichtet, im Ruhezustand zusammengefaltet einen Skisack aufzunehmen. In der Gebrauchsstellung wird der Skisack ausgefaltet und es werden von dem Lade- oder Kofferraum her die Skier in den Skisack eingeschoben.

Der Behälter, der den Skisack aufnimmt, ist in der Fassungsanordnung lösbar eingesetzt. Nach Herausnehmen kann der Skisack leichter zusammengefaltet und/oder gereinigt werden.

Anstelle des Skisackbehälters können auch andere Behälter in die Fassungsanordnung eingeklinkt werden, beispielsweise Behälter mit Cupholdern, Computereinrichtungen und dergleichen mehr.

Es ist von Dokument EP-A-16 422 777 ferner bekannt, Modulboxen an unterschiedlichen Stellen im Fahrzeug unterzubringen, um sie hier zu parken und jeweils die am dringendsten benötigte Modulbox an der dafür vorgesehenen Stelle funktionsfähig einzusetzen.

Schließlich ist es aus dem Stand der Technik bekannt, im Lade- oder Kofferraum in den Seitenbereichen Behälter unterhalb der Fahrzeuggürtellinie unterzubringen, um den Stauraum besser auszunutzen. Auch diese Behälter sind bei geöffnetem Kofferraum jederzeit zu entnehmen.

Leider hat die Praxis gezeigt, dass die Durchladeöffnung in der Trennwand zwischen Fahrgastzelle und Laderaum als Durchgang für Einbrüche verwendet wird. Nach dem Öffnen der Heck- oder Kofferklappe kann der Behälter verhältnismäßig leicht entfernt werden, um sich so Zugang zum Innenraum zu verschaffen.

Der Behälter kann auch als Aufbewahrungsort für wertvolles Gepäck dienen und muss dann naturgemäß besonders gegen Diebstahl gesichert werden.

Ausgehend hiervon ist es Aufgabe der Erfindung ein Kraftfahrzeug zu schaffen, bei dem die Modulbox gesichert ist, insbesondere gut gegen Entwenden oder Entfernen geschützt ist.

Diese Aufgabe wird erfindungsgemäß mit einem Fahrzeug mit den Merkmalen der Ansprüche 1, 19 oder 36 gelöst.

Bei dem erfindungsgemäßen Kraftfahrzeug ist wenigstens eine Fassungsanordnung vorgesehen, die dazu eingerichtet ist, einen Behälter aufzunehmen. Der Behälter kann nach Belieben aus der Fassungsanordnung herausgenommen werden.

Der Behälter setzt sich aus einem Korpus und wenigstens einem daran anscharnierten Deckel zusammen. Um den Korpus in der Fassungsanordnung zu halten, ist an dem Korpus eine Klinke gelagert, die mit einer entsprechenden Ausnehmung in der Fassungsanordnung zusammenwirkt.

Ferner ist eine Verriegelungsmechanik vorgesehen, um den Deckel in der geschlossenen Stellung zu halten.

Um die Verriegelungsmechanik im Sinne eines Freigebens des Deckels zu betätigen, ist ein manuelles Betätigungsglied vorhanden, das mit der Verrieglungsmechanik gekoppelt ist.

Dem Betätigungsglied ist ein manuell zu betätigendes Schloss zugeordnet, das zwischen zwei Stellungen hin und her bewegbar ist, wobei es in der einen Stellung das Überführen sowohl der Klinke als auch der Verrieglungsmechanik in die Freigabestellung blockiert. Dadurch wird erreicht, dass in der abgesperrten Stellung des Schlosses weder der Behälter zu entnehmen ist, noch sein Deckel geöffnet werden kann.

Die Verrieglung des Behälters in der Fassungsanordnung sorgt dafür, dass im Falle einer Skisackbox oder einer Durchladeeinrichtung die hierfür erforderliche Öffnung in der Rücksitzlehnenkonstruktion dauerhaft und zuverlässig verschlossen bleibt.

Das Absperren des Deckels gewährleistet andererseits eine sichere Aufbewahrung von Gegenständen in dem Behälter bzw. der Modulbox, womit ein weiterer Schutz gegen Diebstahl gewährleistet ist.

Besonders kompakte Verhältnisse werden erreicht, wenn das Schloss in dem Betätigungsglied integriert ist.

Bei dem Schloss kann es sich um ein Zylinderschloss handeln, wobei das Zylindergehäuse von dem Betätigungsglied gebildet ist. In dem Zylindergehäuse in Gestalt des Betätigungsgliedes ist der Zylinderkern oder Rotor drehbar gelagert.

Das Zylindergehäuse kann axial verschieblich gelagert sein. Vorteilhafterweise kann das Zylindergehäuse gegenüber dem Rotor axial verschieblich sein, der seinerseits in dem Behälter gegen axiale Verschiebung gesichert ist.

Das Zylindergehäuse kann mit einer Ausnehmung versehen sein, die mit einem Zylinderbart zusammenwirkt. Je nach Stellung des Zylinderbarts gegenüber der Ausnehmung, lässt sich das Zylindergehäuse in axialer Richtung auf dem Zylinderkern verschieben oder es ist festgelegt.

Zum Verriegeln der Klinke kann ein Riegelbolzen vorgesehen sein, der mit dem Zylinderkern getrieblich gekuppelt ist. Ein Drehen des Zylinderkerns bewirkt eine translatorische Bewegung des Riegelbolzens, der beispielsweise mit einer entsprechenden Ausnehmung an der Klinke zusammenwirken kann, um die Verrieglungsklinke gegen Bewegung zu sichern.

Eine andere Möglichkeit besteht darin, einen Riegelbolzen zu verwenden, der in dem Gehäuse axial verschieblich ist und mit Hilfe des Zylinderkerns in eine Stellung gebracht werden kann, in der er gegenüber der Außenkontur des Behälters zurückgezogen ist, oder in eine Stellung in der er über die Außenkontur des Gehäuses auskragt. In der auskragenden Stellung greift er in eine Öffnung in der Fassungsanordnung ein.

Die Fassungsanordnung kann in der Rücksitzlehne des Kraftfahrzeugs enthalten sein.

Wie bereits oben erwähnt, kann es sich bei dem Behälter um einen Behälter für einen Skisack handeln.

Hierzu kann der Korpus rohrartige Gestalt haben und zusätzlich zu dem einen Deckel ein weiterer Deckel vorhanden sein, der ebenfalls an dem Korpus anscharniert ist.

Bei dem Behälter kann es sich auch um einen Kofferraumbehälter handeln, der an entsprechender Stelle in eine entsprechende Nische des Kofferraums gehalten ist.

Zum Verriegeln des Deckels kann die Verriegelungsmechanik wenigstens einen beweglichen Haken umfassen, der mit einer entsprechenden Öffnung in dem Deckel zusammenwirkt und der mittels einer Feder in die Eingriffstellung mit der Öffnung vorgespannt ist.

Der Haken kann mit dem Betätigungsknopf gekuppelt sein, damit bei einem Niederdrücken des Betätigungsknopfes der Haken in eine Stellung bewegt werden kann, in der der Eingriff zwischen dem Haken und der Öffnung aufgehoben ist, um den Deckel öffnen zu können.

Gemäß einer anderen Ausführungsform weist das Kraftfahrzeug wenigstens eine Fassungsanordnung auf. In der Fassungsanordnung ist ein Behälter einsetzbar, der aus der Fassungsanordnung beliebig wieder herausnehmbar ist.

Der Behälter weist einen Korpus und einen daran anscharnierten Deckel auf, um einen verschließbaren Raum zu schaffen. Eine Verriegelungsmechanik dient dazu, den Deckel in der geschlossenen Stellung an dem Korpus zu verriegeln.

Mittels eines manuell zu betätigenden Betätigungsgliedes, das mit der Verrieglungsmechanik gekuppelt ist, kann die Verrieglungsmechanik in die Öffnungsstellung überführt werden, in der der Deckel vom Korpus weg schwenkbar ist.

Der Korpus enthält einen Riegelbolzen, der in den Korpus längsverschieblich geführt ist. Der Riegelbolzen kann aus einer zurückgezogenen Stellung, in der er über den Korpus nicht übersteht, in eine vorgeschobene Stellung überführt werden, in der er aus dem Korpus auskragt. In der auskragenden Stellung ragt der Riegelbolzen bei eingesetzter Modulbox in eine entsprechende Öffnung in der Fassungsanordnung.

Der Riegelbolzen wird mit Hilfe eines manuell zu betätigenden Schlosses bewegt. Das Schloss ist dem Betätigungsglied zugeordnet.

Als weitere Variante ist ein Fahrzeug vorgesehen, das eine Fassungsanordnung enthält. Die Fassungsanordnung dient der Aufnahme eines Behälters, der wahlweise in die Fassungsanordnung einsetzbar oder aus ihr entnehmbar ist. Um den Behälter in der Fassungsanordnung zu sichern, ist eine Klinke vorgesehen, die an dem Behälter beweglich gelagert ist.

Der Behälter setzt sich aus einem Korpus und wenigstens einem daran anscharnierten Deckel zusammen, um einen verschließbaren Hohlraum zu schaffen.

Um den Deckel an den Korpus an der verriegelten Stellung zu halten, ist eine Verriegelungsmechanik vorgesehen. Der Verriegelungsmechanik ist ein manuell zu betätigendes Betätigungsglied zugeordnet. Mit Hilfe des Betätigungsgliedes kann die Verriegelungsmechanik in eine Stellung überführt werden, in der die Verriegelungsmechanik den Deckel freigibt.

In der Fassungsanordnung ist ein Riegelbolzen enthalten, der in der Fassungsanordnung längsverschieblich geführt ist. Der Riegelbolzen dient dazu, den Behälter in der Fassungsanordnung gegen Diebstahl zu sichern. Dazu ist ferner ein in der Fassungsanordnung enthaltenes Schloss vorgesehen, das mit dem Riegelbolzen gekuppelt ist.

Bei dem Schloss kann es sich um ein Zylinderschloss handeln, wobei das Betätigungsglied das Zylindergehäuse bildet in dem der Zylinderkern drehbar gelagert ist.

Das Zylindergehäuse ist axial verschieblich und kann damit auch als Betätigungsglied dienen.

Die nachfolgende Figurenbeschreibung beschränkt sich auf die Erläuterung der wesentlichen Aspekte der Erfindung. Es ist klar, dass eine Reihe von Abwandlungen möglich sind. Kleinere, nicht beschriebene Details kann der Fachmann in der üblichen Weise den Zeichnungen entnehmen, die insoweit die Figurenbeschreibung ergänzen.

In der Zeichnung ist ein Ausführungsbeispiel des Gegenstandes der Erfindung dargestellt. Es zeigen:
- Fig. 1: den hinteren Teil des Fahrgastraums eines Pkw, in einer teilweise aufgeschnittenen, vereinfachten perspektivischen Darstellung;
- Fig. 2: die aufgeschnittene Heckpartie des Pkw nach Fig. 1, in einer perspektivischen Darstellung unter Veranschaulichung weiterer Orte zur Unterbringung der Fassungsanordnung
- Fig. 3: einen Funktionseinsatz in einer perspektivischen Ansicht auf die Vorderseite;
- Fig. 4: den Funktionseinsatz nach Fig. 3 in einer Seitenansicht;
- Fig. 5: die erfindugsgemäße Modulbox teilweise aufgeschnitten und in einer ersten Funktionsstellung;
- Fig. 6: ein weiteres Ausführungsbeispiel der erfindungsgemäßen Modulbox, teilweise aufgeschnitten; und
- Fig. 7: ein drittes Ausführungsbeispiel der erfindungsgemäßen Modulbox, teilweise aufgeschnitten.

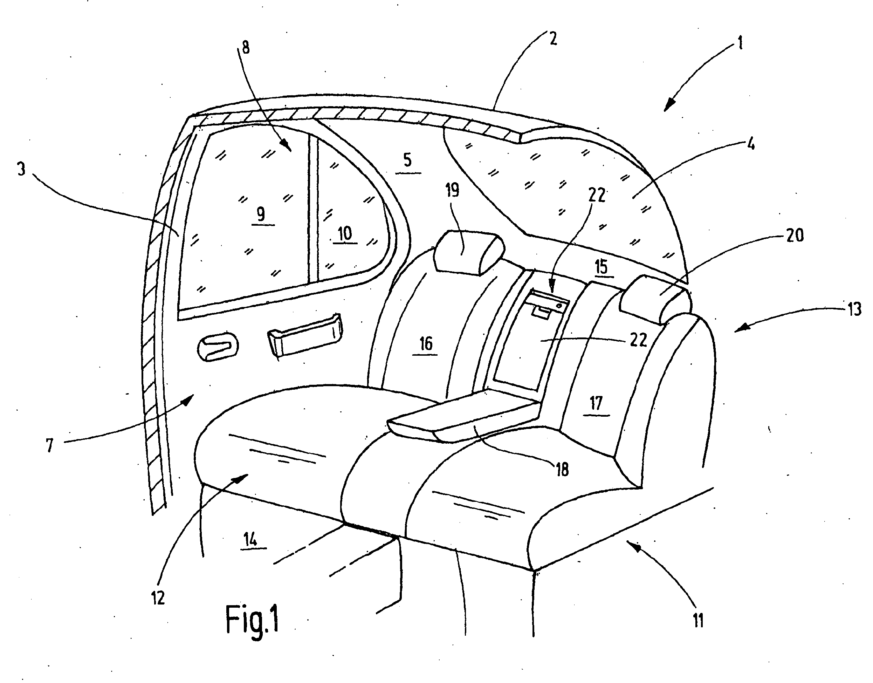

Fig. 1 stellt den aufgebrochenen abgeschnittenen Fondbereich eines Pkw dar. Die Figur veranschaulicht einen Blick auf die rechte Innenseite, die zu der nicht gezeigten linken Innenseite spiegelbildlich ist. Die Darstellung ist vereinfacht. So sind beispielsweise Karosserieinnenstrukturen wie Versteifungen und Befestigungsmittel nicht gezeigt, da ihre Darstellung für das Verständnis der Erfindung nicht erforderlich ist. Ebenso ist die Darstellung der Karosserie schematisiert und lässt die dort vorhandenen Hohlräume nicht erkennen.

Der veranschaulichte Karosserieabschnitt 1 weist ein Dach 2 auf, von dem seitlich eine B-Säule 3 nach oben zu einer nicht gezeigten Bodengruppe führt. Eine entsprechende B-Säule wäre auf der weggebrochenen Seite des Fahrzeugs zu denken. Das Dach 2 geht an seiner Hinterkante in ein Heckfenster 4 über. Seitlich endet das Heckfenster 4 an einer C-Säule 5, die sich im Abstand zu der B-Säule 3 befindet. Die C-Säule 5 trägt eine nicht weiter zu erkennende Innenverkleidung.

Zwischen der B-Säule 3 und der C-Säule 5 ist an der B-Säule 3 eine hintere rechte Seitentür 7 in bekannter Weise anscharniert. Die Seitentür 7 enthält in bekannter Weise ein Fenster 8, das sich in einen Abschnitt 9 mit versenkbarer Scheibe und einen dreieckförmigen Abschnitt 10 mit starren Scheibe aufteilt.

Auf der Höhe der hinteren rechten Seitentür 7 befindet sich eine Rücksitzbank 11, zu der eine Sitzfläche 12 sowie eine Rücksitzlehne 13 gehören. Die Sitzfläche 12 liegt auf einer Sockelfläche 14, die zu der Bodengruppe gehört und in der Fußräume ausgebildet sind.

Knapp unterhalb der Oberkante der Rücksitzlehne 13 befindet sich eine Hutablage 15, die sich zu der Unterkante der Heckscheibe 4 erstreckt.

Die Rücksitzlehne 13 gliedert sich in einen rechten Rückenlehnenabschnitt 16 sowie einen linken Rückenlehnenabschnitt 17, die voneinander, wie gezeigt, ein Stück weit beabstandet sind. In diesem Zwischenraum befindet sich ein Rückenlehnenabschnitt 18, der an seiner Unterkante anscharniert ist und aus der gezeigten liegenden Stellung in eine hochgeklappte Stellung geführt werden kann, in der er die beiden Rückenlehnenabschnitte 16, 17 miteinander verbindet, um so einen dritten Notsitz zu schaffen. An der Oberkante der Rückenlehnenabschnitte 16 und 17 befinden sich Kopfstützen 19 und 20.

In dem normalerweise durch den mittigen Rückenlehnenabschnitt 18 verdeckten Bereich befindet sich eine Fassungsanordnung 21, in die eine Funktionsbox 22 durch den Benutzer lösbar eingesetzt und crashsicher gehalten ist. Die Fassungsanordnung 21 ist karosseriefest, beispielsweise in der Struktur für den rechten Rückenlehnenabschnitt 16 untergebracht, wie dies heute bei Kraftfahrzeugen üblich ist.

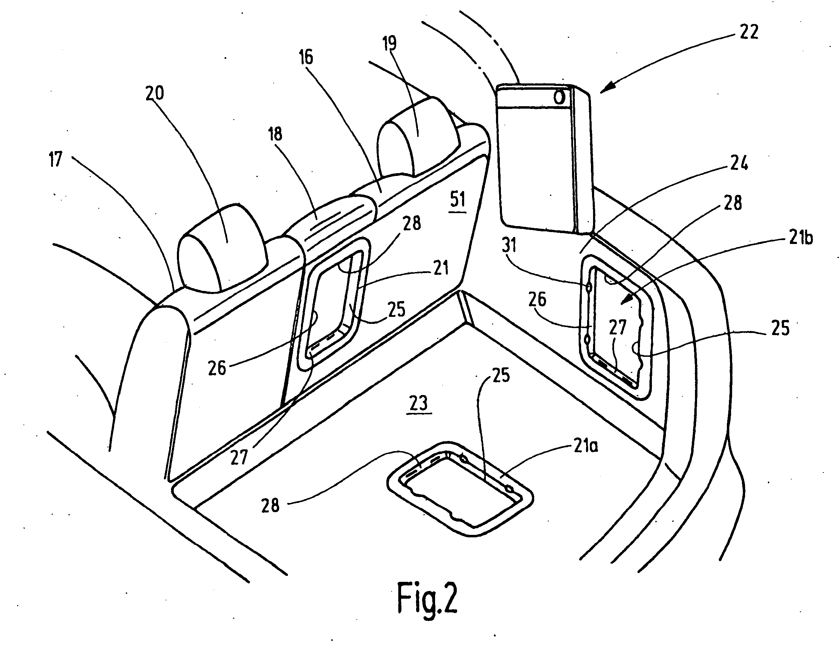

Die Fassungsanordnung 21 zur Aufnahme und Halterung der Funktionsbox 22 ist in Fig. 2 von der Rückseite her gezeigt. Sie hat etwa die Gestalt eines kurzen viereckigen Rohrs und ist mit Strukturen versehen um die Modulbox (Skisack) lösbar zu halten. Weitere ähnliche Fassungsanordnungen 21a und 21b können im Boden des Kofferraums wie er bei 23 gezeigt ist oder in dessen Seitenwand 24 vorgesehen sein, um nur einige der möglichen Orte im Kraftfahrzeug zu erwähnen.

Die Fassungsanordnung 21 wird von zwei zueinander parallelen Seitenwänden 25 und 26 sowie einer oberen und einer unteren Wand 27 und 28 begrenzt, die ebenfalls zueinander parallel sind. Die Seitenwände 25, 26 haben in der Draufsicht Parallelogrammform, damit die obere Wand zum Fahrgastraum nach oben zeigt. Die Tiefe Fassungsanordnung 21 entspricht z.B. der Dicke der Funktions- oder Modulbox.

Eine weitere Erläuterung der Fassungsanordnung 21 erübrigt sich, da diese nicht Gegenstand der Erfindung ist.

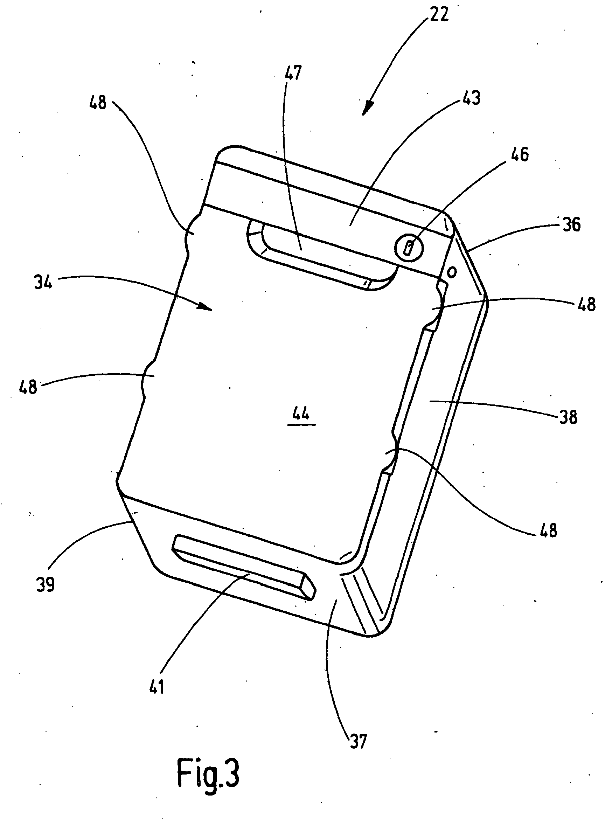

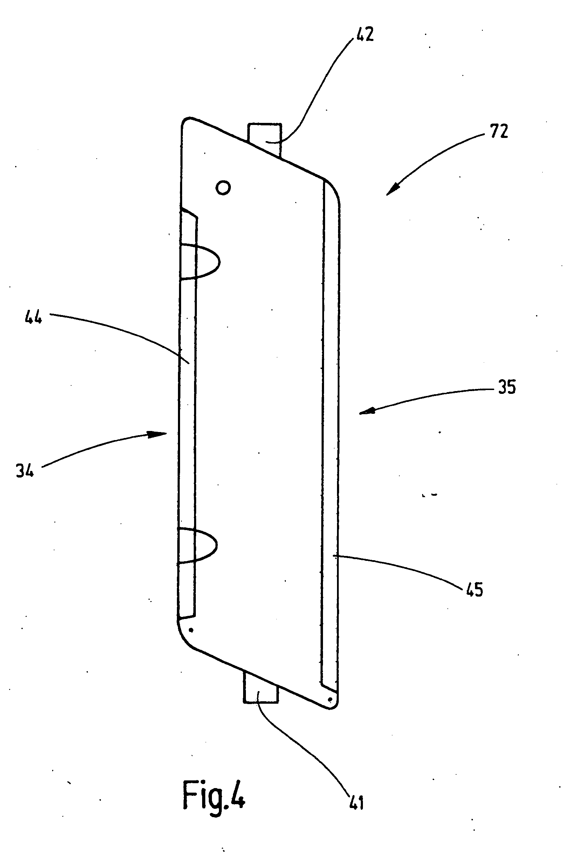

Die Figuren 3 und 4 zeigen in einer perspektivischen Darstellung und in einer Seitenansicht einen Funktionseinsatz 22 in Gestalt einer Modulbox, in deren Innerem beispielsweise zusammengefaltet ein Skisack liegt. Die Modulbox 22 ist ein Parallelepiped, das von einer Vorderseite 34, einer Rückseite 35, einer oberen und einer unteren Schmalseite 36 und 37 sowie zwei seitlichen Schmalseiten 38 und 39 begrenzt ist. Die beiden Schmalseiten 38 und 39 sind zueinander parallel, ebenso wie die Schmalseiten 36 und 37. Auch die Vorderseite 34 ist parallel zu der Rückseite 35. Die Schmalseiten 36, 37, 38, 39 definieren den Korpus der Modulbox 21.

Die Abstände der Schmalseiten 36, 37, 38, 39 und ihre Winkel zueinander sind so bemessen, dass der Funktionseinsatz 22 ohne weiteres in die Fassungsanordnung 21 passt.

An der Unterseite und somit an der unteren Schmalseite 37, steht eine Leiste 41 vor, die mit einer Nut in der unteren Wand 27 der Fassungsanordnung 21 zusammenwirkt. In der oberen Schmalseite 36 steckt beweglich eine Rastklinke 42, die hinter die Kontur, die durch die obere Schmalseite 36 definiert ist, zurückgezogen werden kann. Zur Betätigung der Rast- oder Verriegelungsklinke 42 ist eine Griffleiste 43 vorgesehen, die sich in der Vorderfläche 34 in der Nähe der oberen Kante befindet. Die Griffleiste 43 ist in bekannter Weise um eine Horizontalachse schwenkbar, die sich in der Nähe ihrer Oberkante befindet. Der Mechanismus, der dazu dient die Bewegung der Griffleiste 43 auf die Rastklinke 42 zu übertragen, ist bekannt und braucht deswegen an dieser Stelle nicht erläutert zu werden, zumal er nicht Gegenstand der Erfindung ist.

An der Vorderseite 34 ist ferner ein Deckel 44 anscharniert, der um eine horizontale Achse im Bereich der unteren Schmalseite 37 schwenkbar ist. Der Deckel 44 reicht von der unteren Schmalseite 37 bis zu der Unterkante der Griffleiste 43. Ein weiterer Deckel in Gestalt eines Rückdeckels 45 ist an der Rückseite 35 vorhanden und ebenfalls um eine unten liegende Horizontalachse parallel zu der Schwenkachse des vorderen Deckels schwenkbar. Die beiden Deckel 44 und 45 werden durch zugehörige Klinkenmechanismen in der geschlossenen Stellung gehalten. Die Entriegelung des Deckels 44 geschieht durch eine Drucktaste 46, die in einer Bohrung der Griffleiste 43 sitzt.

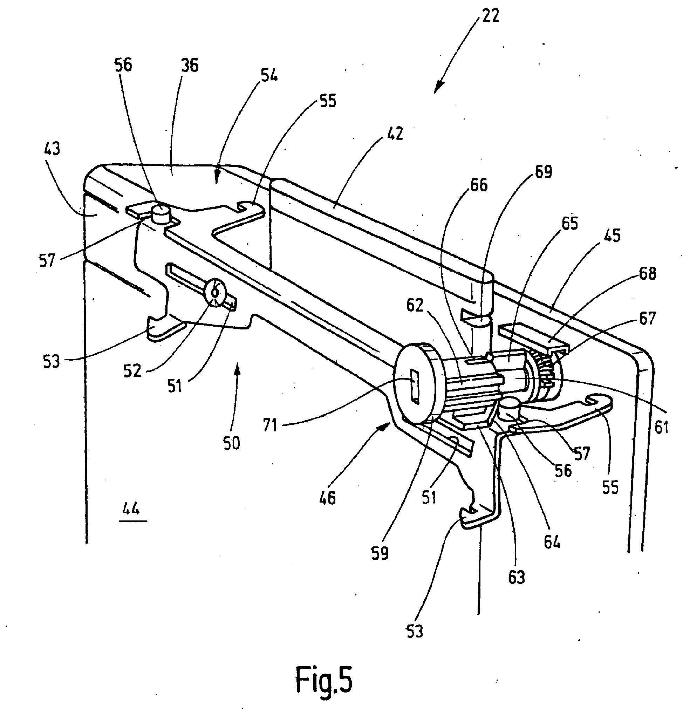

Auf die Verriegelung des Deckels 44 wird weiter unten an Hand von Fig. 5 näher eingegangen.

Der Deckel 44 sowie die Griffleiste 43 und die Drucktaste 46 definieren eine im Wesentlichen plane Ebene, die lediglich von einer Griffmulde 47 unterbrochen ist, die sich im Bereich der Unterkante der Griffleiste 43 befindet und in dem vorderen Deckel 44 ausgebildet ist.

Damit die Modulbox 22 beim Einstecken zwanglos die richtige Position erreicht, ist sie an der Seite mit paraboloidförmigen Ausbuchtungen 48 versehen, die zu den Ausnehmungen in der Fassungsanordnung 21 komplementär sind. Die Ausbuchtungen 48 befinden sich zum Teil an der Seite des vorderen Deckels 44 und zum Teil im Bereich der langen Schmalseiten 38 und 39.

Um die Modulbox 22 in die Fassungsanordnung 21 einzusetzen und zu halten, wird sie mit der unteren Schmalseite 37 voraus vom Fahrgastraum her in die Fassungsanordnung 21 eingeführt. Dabei verhindern die der unteren Schmalseite 37 benachbarten Ausbuchtungen 48, dass die Modulbox 22 zu tief durch den Aufnahmeraum 25 durchgesteckt werden kann. Die Anordnung ist so getroffen, dass die Ausbuchtungen 48 zwanglos in die unteren Ausnehmungen 31 hineinfinden, wenn die Kante, an der die Vorderseite 44 in die untere Schmalfläche 37 übergeht, auf der unteren Fläche 30 des Aufnahmeraums 25 aufsteht.

Die eingesteckte Modulbox 22 kann nunmehr vollständig eingerastet werden, indem sie geschwenkt wird, wobei die unteren Ausbuchtungen 48 in den zugehörigen Ausnehmungen 31 wie Kugeln in Kugelpfannen wirken und eine Schwenkachse definieren.

Die insoweit beschriebene Modulbox 22 ist zusätzlich gegen Diebstahl und somit ungewollte Entnahme gesichert. Die Maßnahmen die hierzu erfindungsgemäß vorgesehen sind, werden nachstehend anhand von Fig. 5 erläutert. Die Modulbox 22 ist in der Figur stark schematisiert um das Wesentliche der Erfindung leichter verstehen zu können. Aus der Zeichnung sind solche Strukturen weggelassen, die die Konstruktionsmaßnahmen gegen unbeabsichtigendes Eindringen von Gegenständen schützen. Außerdem ist die Fig. 5 insofern vereinfacht.

Um den vorderen Deckel 44 geschlossen zu halten, ist unterhalb der oberen Schmalseite 36 ein vorderer Schieber 50 vorgesehen, der in dem Korpus rechtwinklig zu den beiden seitlichen Schmalseiten 38, 39, und damit parallel zu der oberen Schmalseite 36, gelagert ist. Der Schieber 50 weist hierzu zwei längliche Schlitze auf, die in Verlängerung voneinander liegen. Durch die beiden Schlitze 51 führen jeweils Niete 52 hindurch, die in dem Korpus verankert sind. Hierdurch ist der vordere Schieber 50 geführt.

An dem vorderen Schieber 50 sind zwei in Richtung auf den Deckel 44 vorragende Haken 53 ausgebildet, die in dieselbe Richtung zeigen und die mit entsprechenden Öffnungen der Innenseite des Deckels 54 zusammenwirken. Die Haken 53 sind, wie gezeigt, voneinander beabstandet und in der Nähe der zugehörigen Schlitze 51 angeordnet.

Mit dem vorderen Schieber 50 ist ein hinterer Schieber 54 kinematisch gekoppelt, der dazu dient, den Rückdeckel 45 geschlossen zu halten.

Die spezifische Lagerung des hinteren Schiebers 54 ist nicht weiter gezeigt, da dies nicht Gegenstand der Erfindung ist.

Der hintere Schieber 54 ist ebenfalls mit zwei Haken 55 versehen, die mit entsprechenden Öffnungen in dem Rückdeckel 45 zusammenwirkt.

Sowohl der vordere Schieber 50 als auch der hintere Schieber 54 sind durch nicht gezeigte Federn in die Eingriffsstellung mit den entsprechenden Öffnungen vorgespannt.

Der hintere Schieber 54 ist mit dem vorderen Schieber 50 über zwei an dem vorderen Schieber 50 befestigte, nach oben aufragende zylindrische Zapfen 56 gekoppelt, die durch rechteckige Ausnehmungen 57 des hinteren Schiebers 54 hindurch ragen.

Die relative Lage der Zapfen 56 zu den Ausnehmungen 57 und deren Größe, ergibt sich aus der Funktion. Eine Verschiebung des vorderen Schiebers 50 in Richtung entgegen zu der Öffnungsrichtung des Mauls der Hakens 53 entriegelt den vorderen Deckel 44. Der Hub, der dazu erforderlich ist, ist kleiner als das Spiel zwischen dem Zapfen 56 und einer begrenzenden Seitenwand 57. Der hintere Schieber 54 bleibt damit zunächst in der Verrieglungsstellung. Erst wenn der Hub des vorderen Schiebers 50 den erforderlichen Hub zum Entriegeln des vorderen Deckels 44 übersteigt, nimmt der vordere Schieber 50 mit Hilfe der Zapfen 56 den hinteren Schieber 54 mit, und bewegt ihn so, dass die Haken 55 aus der Eingriffsstellung mit dem Rückdeckel 45 loskommen.

Die Bewegung des vorderen Schiebers 50 und damit auch beim entsprechenden Überhub des hinteren Schiebers 54 wird über die Drucktaste 46 veranlasst.

Als Diebstahlsicherung ist die Drucktaste 46 als Zylinderschloss ausgebildet und setzt sich aus einem Zylindergehäuse 59 und einem darin drehbaren und axial verschieblichen Zylinderkern 61 zusammen.

Das Zylindergehäuse 59 ist mit Hilfe von an der Außenseite vorhandenen, parallel zueinander verlaufenden Rippen 62 in einer entsprechenden Struktur in dem Korpus parallel zur Längsachse des Zylinderkerns 61 und damit senkrecht zu der Griffleiste 43 bzw. der Fläche des Deckels 44 unverdrehbar geführt. Die Strukturen zum Führen der Rippe 62 sind in der Zeichnung weggelassen, um die Übersichtlichkeit nicht zu beeinträchtigen und um ein Verdecken der Elemente zu vermeiden, die für das Verständnis der Erfindung wesentlich sind.

An der Unterseite des Zylindergehäuses 59 ist eine Kulisse 63 mit einer Schrägfläche 64 vorgesehen, die mit dem benachbarten Zapfen 56 zusammenwirkt. Durch axiales Verschieben des Zylindergehäuses 59 aus der gezeigten Ruhestellung wird erreicht, dass die Schrägfläche 64 den anliegenden Zapfen 56, bezogen auf die Zeichnung, nach rechts unten schiebt und dadurch den vorderen Schieber 54 in die Stellung bringt, in der der Eingriff der Haken 53 mit den Öffnungen in dem Deckel 44 gelöst ist. Ein noch tieferes Eindrücken des Zylindergehäuses 59 bewirkt dann, wie oben beschrieben, auch noch eine Mitnahme des hinteren Schiebers 54.

Der Zylinderkern oder -rotor 61 ist drehbar, jedoch axial unterschiedlich gelagert und steht, wie die Figur erkennen lässt, über das Zylindergehäuse 59 in der üblichen Weise vor. An dem vorstehenden Teil trägt der Zylinderkern einen Zylinderbart 65 in Gestalt einer schmalen, nach oben zeigenden Lasche. Der Zylinderbart wirkt mit einem Schlitz 66 in dem Zylindergehäuse 59 zusammen.

Aus Sicht des Zylindergehäuses 59 ist auf der abliegenden Seite, bezogen auf den Zylinderbart 65, ein Ritzel 67 drehfest mit dem Zylinderkern 61 verbunden. Das Ritzel 67 kämmt mit einer Zahnstange 68, die unterhalb der Schmalseite 36 in dem Korpus längsverschieblich geführt ist. Die Zahnstange 68 dient als Riegelbolzen und ist dazu eingerichtet, die Verriegelungsklinke 42 gegen Bewegung zu sichern. Hierzu enthält die Verriegelungsklinke 42 eine in Richtung auf die Zahnstange 68 zeigende Verriegelungsnut 69. Die Zahnstange ist parallel zu dem Deckel 45 oder oberen Schmalseite 36 verscheiblich.

### Die Anordnung wirkt wie folgt:

Die in Fig. 5 gezeigte Stellung entspricht der aufgesperrten Stellung, in der der Zylinderbart 65 mit dem Schlitz 66 fluchtet. Dadurch kann der Benutzer nach Belieben, wie oben beschrieben, das Zylindergehäuse 59 im Sinne einer Drucktaste in die Modulbox 22 eindrücken, um den Schieber 50, oder bei tieferer Betätigung zusätzlich den Schieber 54, zu bewegen, damit sich die beiden Deckel 44 und 45 aufklappen lassen.

Anstelle das Zylindergehäuse 59 zu betätigen, kann der Benutzer auch die Griffleiste 43, um die neben der Schmalseite 36 liegende Achse nach oben schwenken, wodurch mittels nicht weiter gezeigter Hebel die Verriegelungsklinke 42 gegen die Wirkung einer nicht dargestellten Feder nach unten in die Modulbox 22 bewegt wird, um sie aus entsprechenden komplimentären Ausnehmungen in der Fassungsanordnung 21 frei zu bekommen. Die Modulbox 22 kann so ungehindert entnommen werden.

Wenn der Benutzer möchte, dass weder die Deckel 44, 45 zu öffnen sind, noch die Modulbox 22 als Ganzes entnommen werden kann, dreht er mit Hilfe eines geeigneten Schlüssels, den er durch eine Öffnung in dem Zylindergehäuse 59 in den Zylinderkern 61 einsteckt, den Zylinderkern 61, beispielsweise aus der gezeigten Stellung, im Gegenuhrzeigersinne um beispielsweise eine viertel Umdrehung. Der Zylinderbart 65 verlässt dabei die Stellung in der er mit dem Schlitz 66 fluchtet und kommt in eine horizontale Stellung. Gleichzeitig wird die Zahnstange 68 in die Ausnehmung 69 der Rastklinke 42 vorgeschoben. In dieser gedrehten Stellung des Zylinderkerns 61 ist eine axiale Verschiebung des als Drucktaste dienenden Zylindergehäuses 59 nicht mehr möglich. Die innenliegende Stirnseite des Zylindergehäuses 59 stößt an dem Zylinderbart 65 an, wodurch eine Verschiebung blockiert ist. Da die Schrägfläche 64 der Kulisse 63 mit dem Zylindergehäuse 59 einstückig verbunden ist, kann folglich auch der Zapfen 56 nicht mehr zur Seite geschoben werden im Sinne einer Betätigung des Schiebers 50.

Die in die Ausnehmung 69 eingreifende Zahnstange 68 verhindert, dass die Rastklinke 42 beim Anheben der Griffleiste 43 nach unten bewegt werden kann. Somit ist auch eine Entnahme der Modulbox 22 aus der Fassungsanordnung 21 verriegelt. Die Modulbox 22 ist in sich abgeschlossen und auch in dem Fahrzeug abgeschlossen und damit gegen Diebstahl weitgehend geschützt.

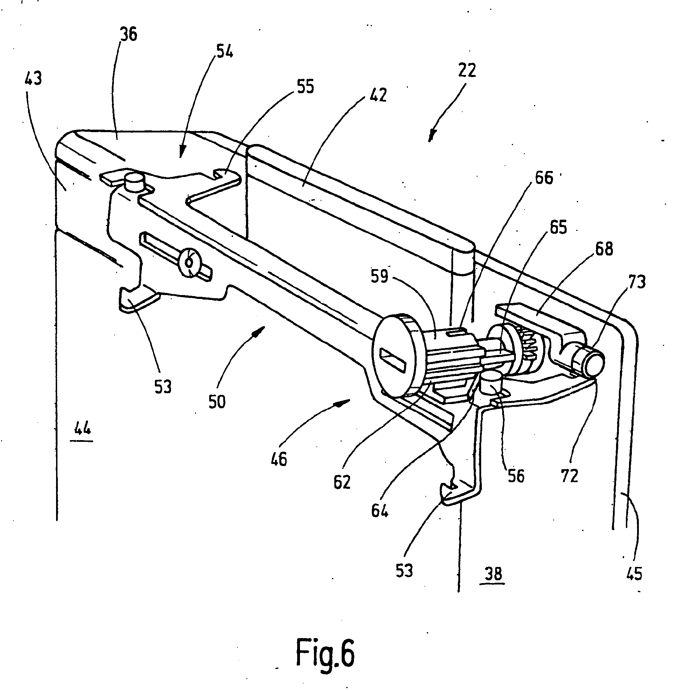

Fig. 6 zeigt eine geänderte Ausführungsform für die Verrieglung der Modulbox 22 in der Fassungsanordnung 21. Bei dem Ausführungsbeispiel nach Fig. 5 wird die Verrieglung der Modulbox 22 in der Fassungsanordnung 21 mit Hilfe eines Sperrens der Klinke 42 bewerkstelligt. Bei der Ausführungsform nach Fig. 6 trägt die Zahnstangen 68 an dem zu der Schmalseite 38 zeigenden Ende einen Zapfen 72. Der Zapfen 72 ist durch eine Öffnung 73, die in der Schmalseite 38 enthalten ist, ausschiebbar. Im vorgeschobenen Zustand ragt der Zapfen 72 in eine korrespondierende Öffnung in der Fassungsanordnung 21.

Fig. 6 zeigt die abgesperrte Stellung. In der veranschaulichten Stellung ist der Zapfen 42 vorgeschoben. Gleichzeitig steht der Zylinderbart 65 in einer Position vor der Stirnseite des Zylindergehäuses 49, in der er nicht mehr mit dem Schlitz 66 fluchtet. Es ist dadurch unmöglich, das Zylindergehäuse 49 in die Modulbox 22 einzudrücken, um über den Zapfen 56 den oder die Schieber 50 bzw. 54 zu betätigen. Andererseits ist es auch unmöglich, durch Anheben der Klappe 43 und Bewegen der Klinke 42 die Modulbox zu entnehmen. Selbst wenn die Klinke 42 in die Modulbox 22 zurückgezogen ist, um insoweit die Verrieglungsstellung zwischen der Fassungsanordnung 21 und der Modulbox 22 aufzuheben, bleibt die Modulbox 22 dennoch in der Fassungsanordnung 21 abgesperrt. Hierfür sorgt der vorgeschobene Zapfen 72, der in eine korrespondierende Öffnung der karosseriefesten Fassungsanordnung 21 eintaucht.

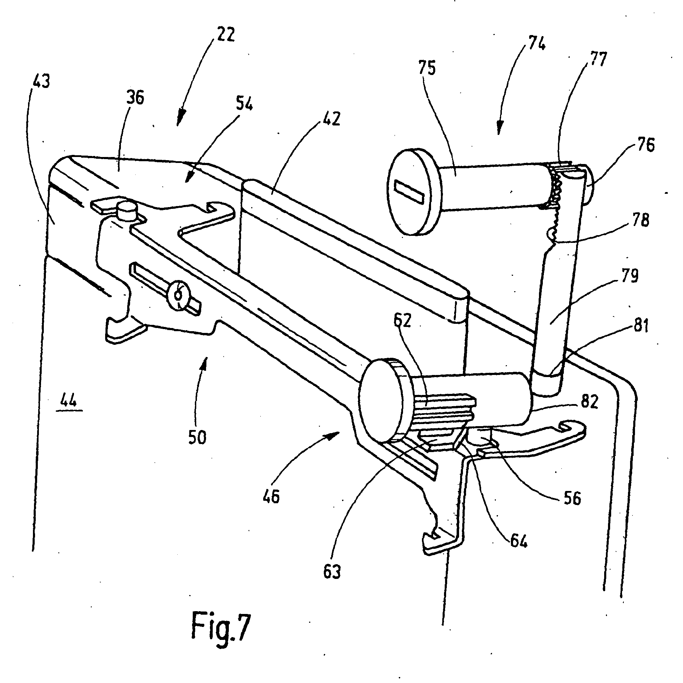

Fig. 7 zeigt in einer stark schematisierten Form eine Ausführungsform, in der ein vereinfacht gezeigtes Zylinderschloss 74 in der Rücksitzlehne 13 integriert ist. Das Zylinderschloss enthält wiederum ein Zylindergehäuse 75 mit einem darin drehbaren Zylinderkern 76. Der Zylinderkern trägt ein Ritzel 77, das mit einer Zahnstange 78 zusammenwirkt. Die Zahnstange 78 geht an einem Ende in einem Riegelbolzen 79 über, der in der Fassungsanordnung 21 längsverschieblich geführt ist.

Die Modulbox 22 enthält in ihrer oberen Schmalseite 36 eine Öffnung 81, die sich in Verlängerung des Betätigungskopfes 46 befindet. Der Betätigungsknopf 46 ist bei dem Ausführungsbeispiel nach Fig. 7 als einfacher zylindrischer Zapfen mit einer Betätigungsplatte ausgeführt. Er trägt zur Führung und Drehsicherung die Rippen 62 sowie die Kulisse 63 mit der Schrägfläche 64. An seinem innenliegenden Ende bildet er eine Anschlagfläche 82, die in unbetätigtem Zustand außerhalb des Lichtraumprofils der Öffnung 81 steht.

In der nicht abgesperrten Stellung wird mit Hilfe eines nicht weiter gezeigten Schlüssels der Zylinderkern 77 oder -rotor in die geöffnete Stellung gedreht. In dieser Stellung ist der Bolzen 49 in die Fassungsanordnung 81 zurückgezogen, d.h. er ragt nicht in die Öffnung 81 hinein.

Der Deckel 45 kann damit durch Niederdrücken des Betätigungsknopfes 46 geöffnet werden, wie dies oben ausführlich erläutert ist. Außerdem kann jederzeit die Modulbox 22 entnommen werden, indem die Klappe 43 angehoben wird. Das Anheben der Klappe 43 führt zu einem Zurückstauchen der Klinke 42 in die Modulbox 22. Die Klinke 42 kommt aus der entsprechenden Aushebung in der Fassungsanordnung frei. Die Modulbox 22 kann entnommen werden.

Zum Absperren wird der Zylinderkern 76 in die in Fig. 7 gezeigte Stellung mit Hilfe des Schlüssels gedreht. Hierdurch wird der Bolzen 49 aus der Fassungsanordnung 21 vorgeschoben. Der Bolzen 79 taucht in die Öffnung 81 ein und er wird soweit bewegt, bis er vor der Stirnfläche 82 des Betätigungsknopfes 46 steht. Der Bolzen 79 steht damit im Lichtraumprofil des Betätigungsknopfes 76. Der Betätigungsknopf 76 kann nicht mehr eingedrückt werden, um über die Schrägfläche 64 den Zapfen 46 zur Seite zu drücken, damit der vordere Schieber 50 und gegebenenfalls der hintere Schieber 54 bewegt werden.

Gleichzeitig blockiert der Eingriff zwischen dem Bolzen 79 und der Öffnung 81 die Entnahme der Modulbox 22 aus der Fassungsanordnung. Selbst wenn mit Hilfe der Klappe 83 die Klinke 42 zurückgezogen wird, ist es unmöglich die Modulbox 22 zu entnehmen, da nach wie vor eine Eingriffsstellung zwischen dem Riegelbolzen 79 und der Öffnung 81 besteht. Der Riegelbolzen blockiert die zur Entnahme notwendige Bewegung in Richtung,senkrecht zu der Fläche des Deckels 44, weil die Achsen des Riegelbolzens 79 parallel zu der Fläche ausgerichtet ist.

Der Aufbau der jeweils verwendeten Zylinderschlösser braucht nicht erläutert zu werden, da dem Fachmann aus dem Stand der Technik genügend Lösungen bekannt sind. Es kommt lediglich darauf an eine Lösung zu wählen, bei der in der aufgesperrten Stellung das Zylindergehäuse gegenüber dem Zylinderkern in axialer Richtung bewegbar ist.

Ein Fahrzeug weist eine gegen Diebstahl gesicherte Modulbox auf. Hierzu ist eine manuell zu betätigendes Schloss vorgesehen. Das Schloss kann entweder in der Modulbox oder in der Karosserie enthalten sein. Mit Hilfe des Zylinderkerns des Schlosses werden Elemente in der Modulbox oder der Fassungsanordnung bewegt, die dafür sorgen, dass die Öffnungsmechanik der Modulbox blockiert wird und außerdem auch die Entnahme aus der Fassungsanordnung.

## Patentansprüche

1. Kraftfahrzeug, insbesondere Personenkraftfahrzeug,
mit wenigstens einer Fassungsanordnung (21),
mit einem Behälter (22), der wahlweise in die Fassungsanordnung (21) einsetzbar oder aus der Fassungsanordnung (21) entnehmbar ist und der einen Korpus (34..39) und wenigstens einen Deckel (44,45) aufweist, der an dem Korpus (34..39) anscharniert ist,
mit einer dem Korpus (34..39) zugeordneten eine Klinke (42), die mit einer Ausnehmung in der Fassungsanordnung (21) zusammenwirkt und dazu eingerichtet ist den Korpus (34..39) in der Fassungsanordnung (21) verriegelt zu halten,
mit einer Verriegelungsmechanik (50,54) zum Verriegeln des Deckels (44,45) in der geschlossenen Stellung,
mit einem manuellen Betätigungsglied (46), das mit der Verriegelungsmechanik (50,54) gekuppelt ist um die Verriegelungsmechanik (50,54) in die Freigabestellung für den Deckel (44, 45) zu überführen,
**gekennzeichnet durch** ein dem Betätigungsglied (46) zugeordnete manuell zu betätigenden Schloss (59,61), das zwischen zwei Stellungen hin und her bewegbar ist, wobei es in einer Stellung das Überführen der Klinke (42) und das Überführen der Verriegelungsmechanik (50,54) in die Freigabestellung blockiert.

2. Vorrichtung nach Anspruch 1 oder 3, **dadurch gekennzeichnet, dass** das Schloss (59,61) in dem Betätigungsglied (46) integriert ist.

3. Vorrichtung nach Anspruch 1, **dadurch gekennzeichnet, dass** das Betätigungsglied (46) ein Zylindergehäuse (59) bildet, in dem ein Zylinderkern (61) drehbar gelagert ist.

4. Vorrichtung nach Anspruch 3, **dadurch gekennzeichnet, dass** das Zylindergehäuse (59) axial verschieblich gelagert ist.

5. Vorrichtung nach Anspruch 3, **dadurch gekennzeichnet, dass** das Zylindergehäuse (59) gegenüber dem Zylinderkern (61) axial verschieblich ist.

6. Vorrichtung nach Anspruch 3, **dadurch gekennzeichnet, dass** das Zylindergehäuse (59) eine Ausnehmung (66) aufweist, die mit einem Zylinderbart (65) an dem Zylinderkern (61) zusammenwirkt.

7. Vorrichtung nach Anspruch 1, **dadurch gekennzeichnet, dass** in dem Behälter (22) ein Riegelbolzen (68) verschieblich gelagert ist.

8. Vorrichtung nach den Ansprüchen 3 und 7, **dadurch gekennzeichnet, dass** der Riegelbolzen (68) mit dem Zylinderkern (61) gekuppelt ist, derart, dass bei einer Drehung des Zylinderkerns (61) der Riegelbolzen (68) axial verschoben wird.

9. Vorrichtung nach Anspruch 8, **dadurch gekennzeichnet, dass** der Riegelbolzen (68) mit der Klinke (42) zusammenwirkt um in der betätigten Stellung die Klinke (42) zu arretieren.

10. Vorrichtung nach Anspruch 1, **dadurch gekennzeichnest, dass** die Fassungsanordnung (21) in einer Rücksitzlehne (13) des Kraftfahrzeugs vorgesehen ist.

11. Vorrichtung nach Anspruch 10, **dadurch gekennzeichnet, dass** die Fassungsanordnung (21) eine Durchladeöffnung in der Rücksitzlehne (13) bildet.

12. Vorrichtung nach Anspruch 1, **dadurch gekennzeichnet, dass** die Fassungsanordnung (21) in dem Lade- oder Kofferraum des Kraftfahrzeugs vorgesehen ist.

13. Vorrichtung nach Anspruch 1, **dadurch gekennzeichnet, dass** der Korpus (34..39) eine rohrartige Gestalt aufweist, und dass an beiden Enden Deckel (44,45) oder Klappen vorgesehen sind.

14. Vorrichtung nach Anspruch 1, **dadurch gekennzeichnet, dass** der Behälter (22) ein Skisackbehälter ist.

15. Vorrichtung nach Anspruch 1, **dadurch gekennzeichnet, dass** der Behälter (22) ein Kofferraumbehälter ist.

16. Vorrichtung nach Anspruch 1, **dadurch gekennzeichnet, dass** die Verriegelungsmechanik (50,54) wenigstens einen beweglichen Haken (53,55) umfasst, der mit einer Öffnung in dem Deckel (44,45) zusammenwirkt und der mittels einer Feder in die Eingriffsstellung mit der Öffnung vorgespannt ist.

17. Vorrichtung nach Anspruch 16, **dadurch gekennzeichnet, dass** der Haken (53,55) mit dem Betätigungsknopf (46) gekuppelt ist, mittels dem der Haken (53,55) manuell in eine Stellung zu bewegen ist, in der der Eingriff zwischen dem Haken (53,55) und der Öffnung gelöst ist um den Deckel (44,45) öffnen zu können.

18. Vorrichtung nach Anspruch 1, **dadurch gekennzeichnet, dass** der Korpus (34..39) eine Öffnung (73) aufweist, die zur Aufnahme des Riegelbolzens (68) vorgesehen ist.

19. Kraftfahrzeug, insbesondere Personenkraftfahrzeug,
mit wenigstens einer Fassungsanordnung (21),
mit einem Behälter (22), der wahlweise in die Fassungsanordnung (21) einsetzbar oder aus der Fassungsanordnung (21) entnehmbar ist und der einen Korpus (34..39) und wenigstens einen Deckel (44,45) aufweist, der an dem Korpus (34..39) anscharniert ist,
mit einer dem Korpus (34..39) zugeordneten eine Klinke (42), die mit einer Ausnehmung in der Fassungsanordnung (21) zusammenwirkt und dazu eingerichtet ist den Korpus (34..39) in der Fassungsanordnung (21) verriegelt zu halten,
mit einer Verriegelungsmechanik (50,54) zum Verriegeln des Deckels (44,45) in der geschlossenen Stellung,
mit einem manuellen Betätigungsglied (46), das mit der Verriegelungsmechanik (50,54) gekuppelt ist um die Verriegelungsmechanik (50,45) in die Freigabestellung für den Deckel (44,45) zu überführe, **gekennzeichnet durch** einen in dem Korpus (34..39) enthaltenen Riegelbolzen (68), der in dem Korpus (34..39) längsverschieblich geführt ist und in eine aus dem Korpus (34..39) auskragende Stellung überführbar ist, in der er in eine Öffnung in der Fassungsanordnung (21) eingreift, und **durch** ein dem Betätigungsglied (46) zugeordneten manuell zu betätigenden Schloss (59,61), das mit dem Riegelbolzen (68) getrieblich gekuppelt ist und das das Überführen der Verriegelungsmechanik (50,54) in die Freigabestellung blockiert.

20. Vorrichtung nach Anspruch 19, **dadurch gekennzeichnet, dass** das Schloss (59,61) in dem Betätigungsglied (46) integriert ist.

21. Vorrichtung nach Anspruch 19, **dadurch gekennzeichnet, dass** das Betätigungsglied (59,61) ein Zylindergehäuse (59) bildet, in dem ein Zylinderkern (61) drehbar gelagert ist.

22. Vorrichtung nach Anspruch 21, **dadurch gekennzeichnet, dass** das Zylindergehäuse (59) axial verschieblich gelagert ist.

23. Vorrichtung nach Anspruch 21, **dadurch gekennzeichnet, dass** das Zylindergehäuse (59) gegenüber dem Zylinderkern (61) axial verschieblich ist.

24. Vorrichtung nach Anspruch 21, **dadurch gekennzeichnet, dass** das Zylindergehäuse (59) eine Ausnehmung (66) aufweist, die mit einem Zylinderbart (65) an dem Zylinderkern (61) zusammenwirkt.

25. Vorrichtung nach Anspruch 21, **dadurch gekennzeichnet, dass** der Riegelbolzen (68) mit dem Zylinderkern (61) gekuppelt ist, derart, dass bei einer Drehung des Zylinderkerns (61) der Riegelbolzen (68) axial verschoben wird.

26. Vorrichtung nach Anspruch 19, **dadurch gekennzeichnet, dass** der Riegelbozen (68) mit der Fassungsanordnung (21) zusammenwirkt.

27. Vorrichtung nach Anspruch 19, **dadurch gekennzeichnet, dass** die Fassungsanordnung (21) in einer Rücksitzlehne (13) des Kraftfahrzeugs vorgesehen ist.

28. Vorrichtung nach Anspruch 27, **dadurch gekennzeichnet, dass** die Fassungsanordnung (21) eine Durchladeöffnung in der Rücksitzlehne (13) bildet.

29. Vorrichtung nach Anspruch 19, **dadurch gekennzeichnet, dass** die Fassungsanordnung (21) in dem Lade- oder Kofferraum des Kraftfahrzeugs vorgesehen ist.

30. Vorrichtung nach Anspruch 19, **dadurch gekennzeichnet, dass** der Korpus (34..39) eine rohrartige Gestalt aufweist, und dass an beiden Enden Deckel (44,45) oder Klappen vorgesehen sind.

31. Vorrichtung nach Anspruch 19, **dadurch gekennzeichnet, dass** der Behälter (22) ein Skisackbehälter ist.

32. Vorrichtung nach Anspruch 19, **dadurch gekennzeichnet, dass** der Behälter (22) ein Kofferraumbehälter ist.

33. Vorrichtung nach Anspruch 19, **dadurch gekennzeichnet, dass** die Verriegelungsmechanik (50,54) wenigstens einen beweglichen Haken (53,55) umfasst, der mit einer Öffnung in dem Deckel (44,45) zusammenwirkt und der mittels einer Feder in die Eingriffsstellung mit der Öffnung vorgespannt ist.

34. Vorrichtung nach Anspruch 33, **dadurch gekennzeichnet, dass** der Haken (53,55) mit dem Betätigungsknopf (46) gekuppelt ist, mittels dem der Haken (53,55) manuell in eine Stellung zu bewegen ist, in der der Eingriff zwischen dem Haken (53,55) und der Öffnung gelöst ist um den Deckel (44,45) öffnen zu können.

35. Vorrichtung nach Anspruch 19, **dadurch gekennzeichnet, dass** der Korpus (34..39) eine Öffnung (73) aufweist, die zur Aufnahme des Riegelbolzens (68) vorgesehen ist.

36. Kraftfahrzeug, insbesondere Personenkraftfahrzeug, mit wenigstens einer Fassungsanordnung (21),
mit einem Behälter (22), der wahlweise in die Fassungsanordnung (21) einsetzbar oder aus der Fassungsanordnung (21) entnehmbar ist und der einen Korpus (34..39) und wenigstens einen Deckel (44,45) aufweist, der an dem Korpus (34...39) anscharniert ist,
mit einer dem Korpus (34..39) zugeordneten eine Klinke (42), die mit einer Ausnehmung in der Fassungsanordnung (21) zusammenwirkt und dazu eingerichtet ist den Korpus (4,39) in der Fassungsanordnung (21) verriegelt zu halten,
mit einer Verriegelungsmechanik (50,54) zum Verriegeln des Deckels (44,45) in der geschlossenen Stellung,
mit einem manuellen Betätigungsglied (46), das mit der Verriegelungsmechanik (50,54) gekuppelt ist um die Verriegelungsmechanik in die Freigabestellung für den Deckel zu überführen,
**gekennzeichnet durch** einen in der Fassungsanordnung (21) enthaltenen Riegelbolzen (79), der in der Fassungsanordnung (21) längsverschieblich geführt ist und in eine aus der Fassungsanordnung (21) auskragende Stellung überführbar ist, in der er in eine Öffnung (81) in dem Korpus eingreift, und
**durch** eine manuell zu betätigenden Schloss (74), das mit dem Riegelbolzen (79) getrieblich gekuppelt und das Überführen dee Verriegelungsmechanik (50, 54) in die Freigabestellung blockiert und in der Fassungsanordnung (21) enthalten ist.

37. Vorrichtung nach Anspruch 36, **dadurch gekennzeichnet, dass** das Schloss (74) ein Zylinderschloss mit Zylindergehäuse (75) ist, in dem ein Zylinderkern (76) drehbar gelagert ist.

38. Vorrichtung nach Anspruch 37, **dadurch gekennzeichnet, dass** der Riegelbolzen (79) mit dem Zylinderkern (76) gekuppelt ist, derart, dass bei einer Drehung des Zylinderkerns (76) der Riegelbolzen (79) axial verschoben wird.

39. Vorrichtung nach Anspruch 37, **dadurch gekennzeichnet, dass** die Fassungsanordnung (21) in einer Rücksitzlehne (13) des Kraftfahrzeugs vorgesehen ist.

40. Vorrichtung nach Anspruch 39, **dadurch gekennzeichnet, dass** die Fassungsanordnung (21) eine Durchladeöffnung in der Rücksitzlehne (13) bildet.

41. Vorrichtung nach Anspruch 36, **dadurch gekennzeichnet, dass** die Fassungsanordnung (21) in dem Lade- oder Kofferraum des Kraftfahrzeugs vorgesehen ist.

42. Vorrichtung nach Anspruch 36, **dadurch gekennzeichnet, dass** der Korpus (34..39) eine rohrartige Gestalt aufweist, und dass an beiden Enden Deckel (44,45) oder Klappen vorgesehen sind.

43. Vorrichtung nach Anspruch 36, **dadurch gekennzeichnet, dass** der Behälter (22) ein Skisackbehälter ist.

44. Vorrichtung nach Anspruch 36, **dadurch gekennzeichnet, dass** der Behälter (22) ein Kofferraumbehälter ist.

45. Vorrichtung nach Anspruch 36, **dadurch gekennzeichnet, dass** die Verriegelungsmechanik (50,54) wenigstens einen beweglichen Haken (53,55) umfasst, der mit einer Öffnung in dem Deckel (44,45) zusammenwirkt und der mittels einer Feder in die Eingriffsstellung mit der Öffnung vorgespannt ist.

46. Vorrichtung nach Anspruch 45, **dadurch gekennzeichnet, dass** der Haken (53,55) mit dem Betätigungsknopf (46) gekuppelt ist, mittels dem der Haken (53,55) manuell in eine Stellung zu bewegen ist, in der der Eingriff zwischen dem Haken (53,55) und der Öffnung gelöst ist um den Deckel (44,45) öffnen zu können.

## Claims

1. Motor vehicle, in particular automobile,
with at least one mounting arrangement (21),
with a container (22), which can be selectively inserted into the mounting arrangement (21) or removed from the mounting arrangement (21) and which has a body (34 .. 39) and at least one cover (44, 45), which is hinged to the body (34 .. 39), with a catch (42) associated with the body (34..39), which cooperates with a recess in the mounting arrangement (21) and is fitted to hold the body (34..39) locked in the mounting arrangement (21),
with a locking mechanism (50, 54) for locking the cover (44, 45) in the closed position,
with a manual operating member (46), which is coupled to the locking mechanism (50, 54) to move the locking mechanism (50, 54) into the release position for the cover (44, 45),
**characterised by**
a manually operated lock (59, 61), which is associated with the operating member (46) and is movable back and forth between two positions, wherein in one position it blocks the movement of the catch (42) and the movement of the locking mechanism (50, 54) into the release position.

2. Device according to claim 1 or 3?, **characterised in that** the lock (59, 61) is integrated into the operating member (46).

3. Device according to claim 1, **characterised in that** the operating member (46) forms a cylinder housing (59), in which a cylinder core (61) is rotatably mounted.

4. Device according to claim 3, **characterised in that** the cylinder housing (59) is mounted to be axially displaceable.

5. Device according to claim 3, **characterised in that** the cylinder housing (59) is axially displaceable relative to the cylinder core (61).

6. Device according to claim 3, **characterised in that** the cylinder housing (59) has a recess (66), which cooperates with a cylinder beard (65) on the cylinder core (61).

7. Device according to claim 1, **characterised in that** a locking pin (68) is displaceably mounted in the container (22).

8. Device according to claims 3 and 7, **characterised in that** the locking pin (68) is coupled to the cylinder core (61) in such a manner that the locking pin (68) is displaced axially upon a rotation of the cylinder core (61).

9. Device according to claim 8, **characterised in that** the locking pin (68) cooperates with the catch (42) to lock the catch (42) in the actuated position.

10. Device according to claim 1, **characterised in that** the mounting arrangement (21) is provided in a rear seat backrest (13) of the motor vehicle.

11. Device according to claim 10, **characterised in that** the mounting arrangement (21) forms a loading opening in the rear seat backrest (13).

12. Device according to claim 1, **characterised in that** the mounting arrangement (21) is provided in the cargo area or luggage area of the motor vehicle.

13. Device according to claim 1, **characterised in that** the body (34..39) has a tube-like structure, and that covers (44, 45) or flaps are provided at both ends.

14. Device according to claim 1, **characterised in that** the container (22) is a ski bag container.

15. Device according to claim 1, **characterised in that** the container (22) is a luggage area container.

16. Device according to claim 1, **characterised in that** the locking mechanism (50, 54)
comprises at least one movable hook (53, 55), which cooperates with an opening in the cover (44, 45) and which is biased into the engagement position with the opening by means of a spring.

17. Device according to claim 16, **characterised in that** the hook (53, 55) is coupled to the operating button (46), by means of which the hook (53, 55) can be moved manually into a position, in which the engagement between the hook (53, 55) and the opening is released to be able to open the cover (44, 45).

18. Device according to claim 1, **characterised in that** the body (34 .. 39) has an opening (73) provided to receive the locking pin (68).

19. Motor vehicle, in particular automobile,
with at least one mounting arrangement (21),
with a container (22), which can be selectively inserted into the mounting arrangement (21) or removed from the mounting arrangement (21) and which has a body (34 .. 39) and at least one cover (44, 45), which is hinged to the body (34 .. 39), with a catch (42) associated with the body (34 .. 39), which cooperates with a recess in the mounting arrangement (21) and is fitted to hold the body (34 .. 39) locked in the mounting arrangement (21),
with a locking mechanism (50, 54) for locking the cover (44, 45) in the closed position,
with a manual operating member (46), which is coupled to the locking mechanism (50, 54) to move the locking mechanism (50, 54) into the release position for the cover (44, 45),
**characterised by**
a locking pin (68), which is contained in the body (34 .. 39), is guided longitudinally displaceably in the body (34 .. 39) and is movable into a position projecting out of the body (34 .. 39), in which it engages into an opening in the mounting arrangement (21), and by
a manually operated lock (59, 61), which is associated with the operating member (46) and is coupled in transmission to the locking pin (68) and which blocks the movement of the locking mechanism (50, 54) into the release position.

20. Device according to claim 19, **characterised in that** the lock (59, 61) is integrated into the operating member (46).

21. Device according to claim 19, **characterised in that** the operating member (59, 61) forms a cylinder housing (59), in which a cylinder core (61) is rotatably mounted.

22. Device according to claim 21, **characterised in that** the cylinder housing (59) is mounted to be axially displaceable.

23. Device according to claim 21, **characterised in that** the cylinder housing (59) is axially displaceable relative to the cylinder core (61).

24. Device according to claim 21, **characterised in that** the cylinder housing (59) has a recess (66), which cooperates with a cylinder beard (65) on the cylinder core (61).

25. Device according to claim 21, **characterised in that** a locking pin (68) is coupled to the cylinder core (61) in such a manner that the locking pin (68) is displaced axially upon a rotation of the cylinder core (61).

26. Device according to claim 19, **characterised in that** the locking pin (68) cooperates with the mounting arrangement (21).

27. Device according to claim 19, **characterised in that** the mounting arrangement (21) is provided in a rear seat backrest (13) of the motor vehicle.

28. Device according to claim 27, **characterised in that** the mounting arrangement (21) forms a loading opening in the rear seat backrest (13).

29. Device according to claim 19, **characterised in that** the mounting arrangement (21) is provided in the cargo area or luggage area of the motor vehicle.

30. Device according to claim 19, **characterised in that** the body (34 .. 39) has a tube-like structure, and that covers (44, 45) or flaps are provided at both ends.

31. Device according to claim 19, **characterised in that** the container (22) is a ski bag container.

32. Device according to claim 19, **characterised in that** the container (22) is a luggage area container.

33. Device according to claim 19, **characterised in that** the locking mechanism (50, 54) comprises at least one movable hook (53, 55), which cooperates with an opening in the cover (44, 45) and which is biased into the engagement position with the opening by means of a spring.

34. Device according to claim 33, **characterised in that** the hook (53, 55) is coupled to the operating button (46), by means of which the hook (53, 55) can be moved manually into a position, in which the engagement between the hook (53, 55) and the opening is released to be able to open the cover (44, 45).

35. Device according to claim 19, **characterised in that** the body (34 .. 39) has an opening (73) provided to receive the locking pin (68).

36. Motor vehicle, in particular automobile,
with at least one mounting arrangement (21),
with a container (22), which can be selectively inserted into the mounting arrangement (21) or removed from the mounting arrangement (21) and which has a body (34 .. 39) and at least one cover (44, 45), which is hinged to the body (34 .. 39), with a catch (42) associated with the body (34 .. 39), which cooperates with a recess in the mounting arrangement (21) and is fitted to hold the body (34 .. 39) locked in the mounting arrangement (21),
with a locking mechanism (50, 54) for locking the cover (44, 45) in the closed position,
with a manual operating member (46), which is coupled to the locking mechanism (50, 54) to move the locking mechanism into the release position for the cover, **characterised by**
a locking pin (79), which is contained in the mounting arrangement (21), is guided to be longitudinally displaceable in the mounting arrangement (21) and can be moved into a position projecting out of the mounting arrangement (21), in which it engages into an opening (81) in the body, and
by a manually operated lock (74), which is coupled in transmission to the locking pin (79) and blocks the movement of the locking mechanism (50, 54) into the release position, in which the mounting arrangement (21) is contained.

37. Device according to claim 36, **characterised in that** the lock (74) is a cylinder lock with a cylinder housing (75), in which a cylinder core (76) is rotatably mounted.

38. Device according to claim 37, **characterised in that** the locking pin (79) is coupled to the cylinder core (76) in such a manner that the locking pin (79) is displaced axially upon a rotation of the cylinder core (76).

39. Device according to claim 37, **characterised in that** the mounting arrangement (21) is provided in a rear seat backrest (13) of the motor vehicle.

40. Device according to claim 39, **characterised in that** the mounting arrangement (21) forms a loading opening in the rear seat backrest (13).

41. Device according to claim 36, **characterised in that** the mounting arrangement (21) is provided in the cargo area or luggage area of the motor vehicle.

42. Device according to claim 36, **characterised in that** the body (34 .. 39) has a tube-like structure, and that covers (44, 45) or flaps are provided at both ends.

43. Device according to claim 36, **characterised in that** the container (22) is a ski bag container.

44. Device according to claim 36, **characterised in that** the container (22) is a luggage area container.

45. Device according to claim 36, **characterised in that** the locking mechanism (50, 54) comprises at least one movable hook (53, 55), which cooperates with an opening in the cover (44, 45) and which is biased into the engagement position with the opening by means of a spring.

46. Device according to claim 45, **characterised in that** the hook (53, 55) is coupled to the operating button (46), by means of which the hook (53, 55) can be moved manually into a position, in which the engagement between the hook (53, 55) and the opening is released to be able to open the cover (44, 45).

## Revendications

1. Véhicule automobile, en particulier véhicule de tourisme, qui comprend :
- au moins un système de monture (21),
- un conteneur (22), qui à volonté peut être introduit dans le système de monture (21) ou en être retiré et qui présente un corps (34...39) et au moins un couvercle (44, 45) monté sur le corps (34...39) par une charnière,
- associé au corps (34...39), un cliquet (42) qui coopère avec un évidement du système de monture (21) et qui est conçu pour maintenir verrouillé le corps (34...39) dans le système de monture,
- un mécanisme de verrouillage (50, 54) pour verrouiller le couvercle (44, 45) en position fermée,
- un organe manuel d'actionnement (46) qui est accouplé au mécanisme de verrouillage (50, 54) pour faire passer celui-ci en position de libération du couvercle (44, 45),
ce véhicule étant **caractérisé en ce qu'**une serrure (59, 61) à commande manuelle, qui est associée à l'organe d'actionnement (46), peut se déplacer entre deux positions, et dans l'une de ces positions elle bloque le passage du cliquet (42) et celui du mécanisme de verrouillage (50, 54) en position de libération.

2. Dispositif selon la revendication 1 ou 3, **caractérisé en ce que** la serrure (59, 61) est intégrée à l'organe d'actionnement (46).

3. Dispositif selon la revendication1, **caractérisé en ce que** l'organe d'actionnement (46) présente un boîtier de cylindre (59) dans lequel peut tourner un noyau de cylindre (61).

4. Dispositif selon la revendication 3, **caractérisé en ce que** le boîtier de cylindre (59) est monté de manière à pouvoir coulisser axialement.

5. Dispositif selon la revendication 3, **caractérisé en ce que** le boîtier de cylindre (59) peu coulisser axialement par rapport au noyau de cylindre (61).

6. Dispositif selon la revendication 3, **caractérisé en ce que** le boîtier de cylindre (59) présente un évidement (66) qui coopère avec une barbe de cylindre (65) prévue sur le noyau de cylindre (61).

7. Dispositif selon la revendication 1, **caractérisé en ce que** dans le récipient (22) est monté, de manière à pouvoir coulisser, un boulon de verrouillage (68).

8. Dispositif selon les revendications 3 et 7, **caractérisé en ce que** le boulon de verrouillage (68) est accouplé au noyau de cylindre (61) de manière qu'une rotation de celui-ci le fasse coulisser axialement.

9. Dispositif selon la revendication 8, **caractérisé en ce que** le boulon de verrouillage (68) coopère avec le cliquet (42) pour bloquer celui-ci dans la position qui a été actionnée.

10. Dispositif selon la revendication 1, **caractérisé en ce que** le système de monture (21) est prévu dans un dossier de siège arrière (13) du véhicule.

11. Dispositif selon la revendication 10, **caractérisé en ce que** le système de monture (21) forme une ouverture de réception dans le dossier de siège arrière (13).

12. Dispositif selon la revendication 1, **caractérisé en ce que** le système de monture (21) est prévu dans l'espace de chargement ou dans le coffre du véhicule.

13. Dispositif selon la revendication 1, **caractérisé en ce que** le corps (34...39) a une configuration tubulaire et présente à ses deux extrémités des couvercles (44, 45) ou des clapets.

14. Dispositif selon la revendication 1, **caractérisé en ce que** le conteneur (22) est un conteneur pour sac de ski.

15. Dispositif selon la revendication 1, **caractérisé en ce que** le conteneur (22) est un conteneur pour coffre à bagages.

16. Dispositif selon la revendication 1, **caractérisé en ce que** le mécanisme de verrouillage (50, 54) comprend au moins un crochet (53, 55) mobile qui coopère avec une ouverture prévue dans le couvercle (44, 45) et qui est précontraint par un ressort de manière à être en prise avec l'ouverture.

17. Dispositif selon la revendication 16, **caractérisé en ce que** le crochet (53, 55) est accouplé à la tête d'actionnement (46) par laquelle le crochet (53, 55) est à amener manuellement dans une position où est rompue la prise entre le crochet (53, 55) et l'ouverture, de manière à permettre l'ouverture du couvercle (44, 45).

18. Dispositif selon la revendication 1, **caractérisé en ce que** le corps (34....39) présente une ouverture qui est prévue pour accueillir la barbe de cylindre (68).

19. Véhicule automobile, en particulier véhicule de tourisme, qui comprend :
- au moins un système de monture (21),
- un conteneur (22), qui à volonté peut être introduit dans le système de monture (21) ou en être retiré et qui présente un corps (34...39) et au moins un couvercle (44, 45) monté sur le corps (34...39) par une charnière,
- associé au corps (34...39), un cliquet (42) qui coopère avec un évidement du système de monture (21) et qui est conçu pour maintenir verrouillé le corps (34...39) dans le système de monture,
- un mécanisme de verrouillage (50, 54) pour verrouiller le couvercle (44, 45) en position fermée,
- un organe manuel d'actionnement (46) qui est accouplé au mécanisme de verrouillage (50, 54) pour faire passer celui-ci en position de libération du couvercle (44, 45),
ce véhicule étant **caractérisé en ce qu'**à l'intérieur du corps (34...39) et pouvant y coulisser longitudinalement, un boulon de verrouillage (68) peut être amené dans une position dépassant le corps (34...39) et dans laquelle il est en prise avec une ouverture du système de monture (21),
- associée à l'organe d'actionnement (46), une serrure (59, 61) à commande manuelle est accouplée en entraînement avec le boulon de verrouillage (68) et bloque le passage du mécanisme de verrouillage (50, 54) à la position de libération.

20. Dispositif selon la revendication 19, **caractérisé en ce que** la serrure (59, 61) est intégrée à l'organe d'actionnement (46).

21. Dispositif selon la revendication 19, **caractérisé en ce que** l'organe d'actionnement (46) présente un boîtier de cylindre (59) dans lequel peut tourner un noyau de cylindre (61).

22. Dispositif selon la revendication 21, **caractérisé en ce que** le boîtier de cylindre (59) est monté de manière à pouvoir coulisser axialement.

23. Dispositif selon la revendication 21, **caractérisé en ce que** le boîtier de cylindre (59) peu coulisser axialement par rapport au noyau de cylindre (61).

24. Dispositif selon la revendication 21, **caractérisé en ce que** le boîtier de cylindre (59) présente un évidement (66) qui coopère avec une barbe de cylindre (65) prévue sur le noyau de cylindre (61).

25. Dispositif selon la revendication 21, **caractérisé en ce que** le boulon de verrouillage (68) est accouplé au noyau de cylindre (61) de manière qu'une rotation de celui-ci le fasse coulisser axialement.

26. Dispositif selon la revendication 19, **caractérisé en ce que** le boulon de verrouillage (68) coopère avec le système de monture (21).

27. Dispositif selon la revendication 19, **caractérisé en ce que** le système de monture (21) est prévu dans un dossier de siège arrière (13) du véhicule.

28. Dispositif selon la revendication 27, **caractérisé en ce que** le système de monture (21) forme une ouverture de réception dans le dossier de siège arrière (13).

29. Dispositif selon la revendication 19, **caractérisé en ce que** le système de monture (21) est prévu dans l'espace de chargement ou dans le coffre du véhicule.

30. Dispositif selon la revendication 19, **caractérisé en ce que** le corps (34...39) a une configuration tubulaire et présente à ses deux extrémités des couvercles (44, 45) ou des clapets.

31. Dispositif selon la revendication 19, **caractérisé en ce que** le conteneur (22) est un conteneur pour sac de ski.

32. Dispositif selon la revendication 19, **caractérisé en ce que** le conteneur (22) est un conteneur pour coffre à bagages.

33. Dispositif selon la revendication 19, **caractérisé en ce que** le mécanisme de verrouillage (50, 54) comprend au moins un crochet (53, 55) mobile qui coopère avec une ouverture prévue dans le couvercle (44, 45) et qui est précontraint par un ressort de manière à être en prise avec l'ouverture.

34. Dispositif selon la revendication 33, **caractérisé en ce que** le crochet (53, 55) est accouplé à la tête d'actionnement (46) par laquelle le crochet (53, 55) est à amener manuellement dans une position où est rompue la prise entre le crochet (53, 55) et l'ouverture, de manière à permettre l'ouverture du couvercle (44, 45).

35. Dispositif selon la revendication 19, **caractérisé en ce que** le corps (34....39) présente une ouverture qui est prévue pour accueillir la barbe de cylindre (68).

36. Véhicule automobile, en particulier véhicule de tourisme, qui comprend :
- au moins un système de monture (21),
- un conteneur (22), qui à volonté peut être introduit dans le système de monture (21) ou en être retiré et qui présente un corps (34...39) et au moins un couvercle (44, 45), monté sur le corps (34...39) par une charnière,
- associé au corps (34...39), un cliquet (42) qui coopère avec un évidement du système de monture (21) et qui est conçu pour maintenir verrouillé le corps (34...39) dans le système de monture,
- un mécanisme de verrouillage (50, 54) pour verrouiller le couvercle (44, 45) en position fermée,
- un organe manuel d'actionnement (46) qui est accouplé au mécanisme de verrouillage (50, 54) pour faire passer celui-ci en position de libération du couvercle (44, 45),
ce véhicule étant **caractérisé en ce que**, monté à l'intérieur du système de monture (21) et pouvant y coulisser longitudinalement, un bouton de verrouillage (79) peut être amené dans une position dépassant le système (21) et dans laquelle il est en prise avec une ouverture (81) du corps,
- contenue dans le système de monture (21), une serrure (74) à actionnement manuel peut être accouplée en entraînement avec le bouton de verrouillage (79) et bloque le passage du mécanisme de verrouillage (50, 54) à la position de libération.

37. Dispositif selon la revendication 36, **caractérisé en ce que** la serrure (74) est une serrure à cylindre avec un boîtier de cylindre (75) dans lequel peut tourner un noyau de cylindre (76).

38. Dispositif selon la revendication 37, **caractérisé en ce que** le boulon de verrouillage (68) est accouplé au noyau de cylindre (61) de manière qu'une rotation de celui-ci le fasse coulisser axialement.

39. Dispositif selon la revendication 37, **caractérisé en ce que** le système de monture (21) est prévu dans le dossier de siège arrière (13) du véhicule.

40. Dispositif selon la revendication 39, **caractérisé en ce que** le système de monture (21) forme une ouverture de réception dans le dossier de siège arrière (13).

41. Dispositif selon la revendication 36, **caractérisé en ce que** le système de monture (21) est prévu dans l'espace de chargement ou dans le coffre du véhicule.

42. Dispositif selon la revendication 36, **caractérisé en ce que** le corps (34...39) a une configuration tubulaire et à ses deux extrémités sont prévus des couvercles (44, 45) ou des clapets.

43. Dispositif selon la revendication 36, **caractérisé en ce que** le conteneur (22) est un conteneur pour sac de ski.

44. Dispositif selon la revendication 36, **caractérisé en ce que** le conteneur (22) est un conteneur pour coffre à bagages.

45. Dispositif selon la revendication 36, **caractérisé en ce que** le mécanisme de verrouillage (50, 54) comprend au moins un crochet (53, 55) mobile qui coopère avec une ouverture prévue dans le couvercle (44, 45) et qui est précontraint par un ressort pour être en prise avec l'ouverture.

46. Dispositif selon la revendication 45, **caractérisé en ce que** le crochet (53, 55) est accouplé à la tête d'actionnement (46) par laquelle le crochet (53, 55) est à amener manuellement dans une position où est rompue la prise entre le crochet (53, 55) et l'ouverture, de manière à permettre l'ouverture du couvercle (44, 45).
